# NOUVEAU FASCICULE DE BREVET EUROPEEN

(11) **EP 0 778 190 B2**
(45) Date de publication et mention de la décision concernant l'opposition: **04.01.2006**
(45) Mention de la délivrance du brevet: 20.02.2002
(21) Numéro de dépôt: 96119467.7
(22) Date de dépôt: 04.12.1996
(51) Int. Cl.: B60T 11/16, F15B 7/08, F16D 25/08, F16D 25/12

(54) **Cylindre pour un dispositif de commande hydraulique d'un embrayage de véhicule automobile**
Betätigungszylinder einer hydraulischen Kupplung eines Fahrzeuges
Actuation cylinder of a motor vehicle hydraulic clutch

(30) Priorité: 05.12.1995 FR 9514370
(43) Date de publication de la demande: 11.06.1997
(60) Demande divisionnaire: 00119114.7
(73) Titulaire: VALEO, 75017 Paris (FR)
(72) Inventeur: Rey, Frédéric, 95210 Saint Gratien (FR)
(74) Mandataire: Gamonal, Didier

(56) Documents cités:
- EP-A- 0 345 451
- WO-A-87/03344
- WO-A-95/13206
- DE-A- 3 816 608
- DE-A- 3 910 691
- DE-A- 4 313 346
- DE-A- 4 322 969
- GB-A- 1 120 068
- US-A- 5 291 974

## Description

L'invention concerne un cylindre de commande pour un dispositif de commande hydraulique d'un embrayage de véhicule, et un procédé pour l'assemblage d'un tel cylindre.

L'invention concerne plus particulièrement un cylindre de commande pour un dispositif de commande hydraulique d'un embrayage de véhicule automobile, du type dans lequel un corps principal de forme générale tubulaire étagée comporte une partie tubulaire avant, fermée à l'avant, et une partie tubulaire arrière de diamètre supérieur ouverte à l'arrière, les deux parties étant délimitées axialement par une paroi transversale annulaire, du type dans lequel une chambre hydraulique est délimitée dans la partie avant du corps principal par un piston dont un tronçon arrière est guidé dans un tube arrière monté dans la partie arrière du corps principal, et du type dans lequel l'étanchéité du cylindre est réalisée pardeuxjoints annulaires qui coopèrent avec le piston.

L'assemblage des composants formant un tel cylindre fait appel à toute une série d'opérations dont l'enchaînement est dicté par la conception même du cylindre et notamment par les contraintes de montage imposées par les joints d'étanchéité ou par les moyens de fixation du tube arrière dans le corps principal.

Ainsi, il a été proposé dans la demande de brevet européen EP-A-0 345 451 un cylindre dans lequel un joint d'étanchéité principal est réalisé sous la forme d'une coupelle à lèvres qui est portée par le corps principal.

Or, le montage d'une telle coupelle nécessite l'utilisation d'un outillage spécifique car elle est montée serrée dans son logement et il faut donc procéder à son montage dans le corps principal préalablement à toute opération.

De plus, le tube arrière est fixé dans le corps principal par vissage, ce qui est une opération d'autant plus délicate à réaliser que le tube arrière et le corps principal sont réalisés en matière plastique et qu'ainsi la phase d'engagements des filetages respectifs des deux pièces doit être bien maîtrisée sous peine de les endommager gravement. Dans le document US-A-5,291,974, conforme au préambule de la revendication 1, le tube arrière est également fixé par vissage dans le corps principal.

Le document DE-A-38 16 608 décrit un cylindre dans lequel le tube arrière est emboîté axialement sur le corps principal et dans lequel un logement est formé dans la paroi transversale du corps de cylindre.

Ce logement n'est pas ouvert au niveau du piston et reçoit partiellement un ressort qui coopère avec une coupelle à lèvres, en sorte que la coupelle à lèvres n'est pas portée par un tube arrière monté dans la partie arrière du corps principal. Il n'est donc pas possible de former un sous-ensemble prémonté autour duquel serait emboîté axialement le corps principal.

L'invention a donc pour but de proposer un cylindre dont la conception en rende le montage particulièrement simple, notamment en vue de son automatisation.

Conformément à l'invention ce problème est résolu par la partie caractérisante de la revendication 1.

D'autres caractéristiques et avantages de l'invention apparaîtront à la lecture de la description détaillée qui suit pour la compréhension de laquelle on se reportera aux dessins annexés dans lesquels :
- les figures 1 et 2 sont des vues en coupe-axiale d'un cylindre récepteur conforme aux enseignements de l'invention, dans lequel le piston est représenté respectivement dans une première position avancée et dans une seconde position reculée ;
- la figure 3 est un détail agrandi de la figure 1 ; et
- la figure 4 est une vue partielle en coupe axiale d'une variante de réalisation de la fixation du tube arrière dans le corps principal.

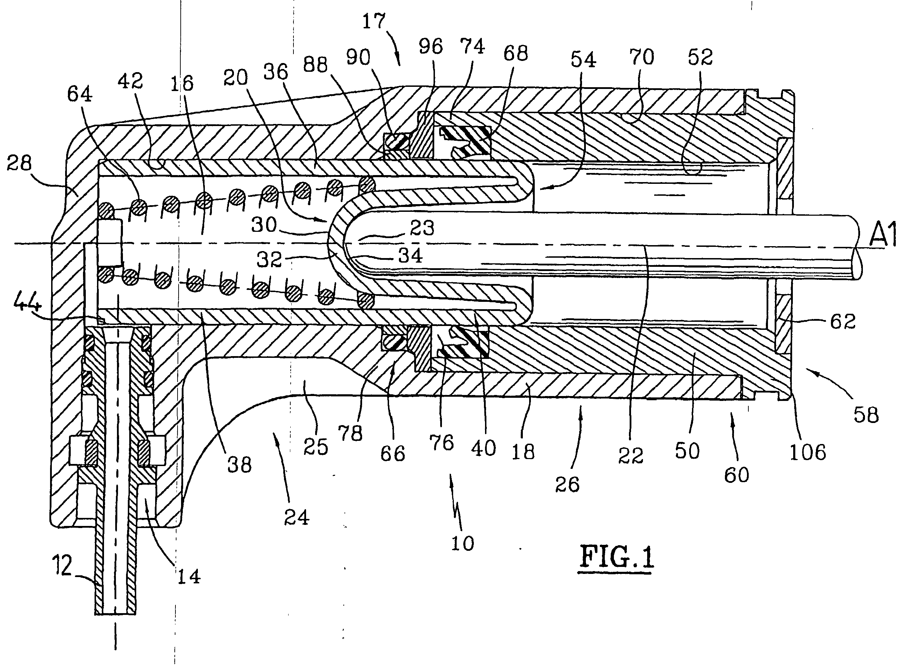

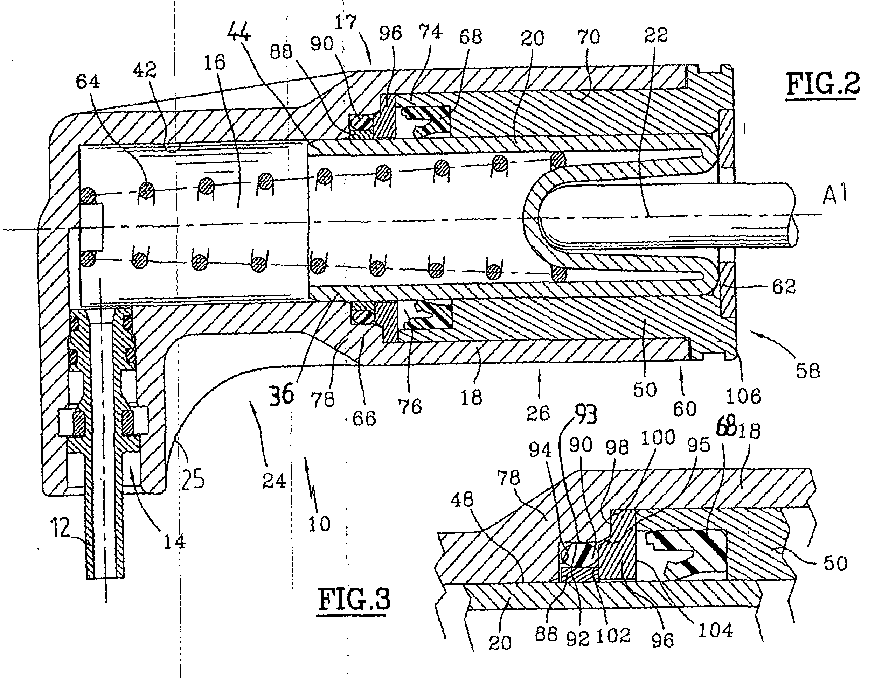

On a représenté sur les figures 1 et 2, un cylindre récepteur 10 d'un dispositif de commande hydraulique d'un embrayage de véhicule automobile.

Un tel dispositif (non représenté) comporte essentiellement un cylindre émetteur, de structure similaire au cylindre récepteur ici représenté, et dont un piston se déplace sous l'action d'une tige de commande reliée par exemple à une pédale d'embrayage sur laquelle agit le conducteur. Le piston du cylindre émetteur est destiné à expulser un fluide, tel que de l'huile, contenu dans une chambre hydraulique en direction d'une canalisation 12 qui relie le cylindre émetteur au cylindre récepteur 10.

La canalisation 12 débouche par un orifice d'entrée 14 à l'intérieur d'une chambre hydraulique 16 à volume variable délimitée dans un corps de cylindre 17 en matière plastique du cylindre récepteur 10 pour provoquer le déplacement d'un piston 20 qui, par l'intermédiaire d'une tige de commande 22, agit par-exemple sur une fourchette de commande d'un embrayage (non représentée) pour provoquer le débrayage.

Le corps de cylindre 17 comporte un corps principal 18 en matière plastique qui présente une forme de tube étagé d'axe A1 et qui comporte une partie avant 24 de diamètre réduit par rapport à une partie arrière 26. Le diamètre interne de la partie avant 24 est donc inférieur au diamètre interne de la partie arrière 26.

Afin de rigidifier le corps de cylindre 17, il est prévu, tout autour de la partie avant 24 du corps principal 18, des nervures de rigidification 25. Le corps 18 est fermé vers l'avant et ouvert vers l'arrière.

Plus précisément la chambre hydraulique 16 est délimitée dans la partie avant 24 du corps de cylindre 17 et elle est délimitée axialement, à l'avant, par une paroi transversale avant 28 dans laquelle est formé l'orifice d'entrée 14, et, à l'arrière, par une face transversale avant 30 du piston 20. Les joints 66 et 68 sont décalés axialement l'un par rapport à l'autre.

On peut prévoir de munir la chambre hydraulique de rainures axiales (non représentées) qui sont par exemple réalisées venues de matière par moulage avec le corps principal 18 et qui sont agencées angulairement en correspondance avec les nervures de rigidification 25. Les rainures permettent notamment de garantir une meilleure répartition de la pression de contact entre le piston 20 et le corps principal 18 et permettent également d'éviter qu'il n'y ait des surépaisseurs de matière dans le corps principal 18 au niveau des nervures 25, ce qui est particulièrement intéressant pour une pièce réalisée par moulage.

Par ailleurs, l'orifice d'entrée 14 débouche radialement dans la chambre hydraulique 16, ce qui permet de diminuer l'encombrement axial du cylindre récepteur 10.

Le volume de la chambre hydraulique 16 est susceptible de varier en fonction de la position du piston 20 dans le corps de cylindre 17, le piston 20 étant susceptible de coulisser axialement entre une première position avancée représentée sur la figure 1 et une deuxième position reculée représentée sur la figure 2.

Le piston 20 qui est représenté dans ces figures est réalisé par emboutissage d'une tôle métallique, par exemple en acier ou en alliage d'aluminium, mais d'autres modes de réalisation, tels que le forgeage ou le moulage, sont envisageables.

Le piston 20 est essentiellement formé d'une paroi transversale 32, dont la face avant 30 délimite la chambre hydraulique 16 et dont une face arrière 34 coopère avec la tige de commande 22, et d'une jupe latérale cylindrique 36 qui assure le guidage du piston 20 dans le corps de cylindre 17.

Le piston 20 étant réalisé par emboutissage, la paroi transversale 32 est formée par un repli de tôle dont la forme est complémentaire de celle de l'extrémité avant 23 de la tige de commande 22. Plus précisément, la paroi transversale 32 comporte une portion centrale sphérique, de même rayon de courbure que l'extrémité 23 de la tige de commande 22, qui est reliée à l'extrémité axiale arrière 54 de la jupe 36 par une portion conique qui autorise un léger débattement angulaire de la tige de commande 22 autour de son extrémité avant 23.

Dans un dispositif de commande hydraulique d'un embrayage, la pression du fluide est susceptible d'atteindre des valeurs de l'ordre de 30 à 40 bars et il est donc nécessaire d'assurer, d'une part, un excellent guidage du piston 20 dans le corps de cylindre 17, pour éviter tout risque d'arc-boutement et de coincement et, d'autre part, d'assurer une étanchéité de très bonne qualité susceptible de résister à de telles pressions.

Dans le but d'améliorer le guidage du piston 20, la jupe annulaire 36 s'étend axialement sur une longueur dont la valeur est comprise entre trois et quatre fois la valeur de son diamètre et comporte ainsi, de part et d'autre de la paroi transversale 32 du piston 20, un tronçon tubulaire avant 38 et un tronçon tubulaire arrière 40.

Le tronçon tubulaire avant 38 de la jupe 36 est destiné à coopérer plus particulièrement avec une surface cylindrique interne 42 de la partie avant 24 du corps de cylindre 17 qui délimite la chambre hydraulique 16.

Le tronçon arrière 40 de la jupe 36 du piston 20 coulisse axialement dans la partie arrière 26 du corps de cylindre 17.

Plus précisément, le tronçon arrière 40 coopère avec un tube arrière de guidage 50 qui est rapporté axialement dans la partie arrière 26 du corps principal 18 et dont une surface cylindrique interne 52 est de diamètre sensiblement égal au diamètre de la surface cylindrique interne 42 de la partie avant 24 du corps principal 18. Le tube 50 est avantageusement en matière plastique.

Le tube arrière 50 est fixé dans le corps principal 18 par collage ou par soudage et son extrémité axiale arrière 58 affleure à l'extrémité axiale arrière 60 du corps principal 18 et comporte un collet radial interne 62, qui est réalisé sous la forme d'une pièce indépendante rapportée, et qui permet de limiter vers l'arrière la course axiale du piston 20 dans le corps de cylindre 17.

On notera que le collage ou le soudage évite toute fuite entre la périphérie interne du corps principal 18 et la périphérie externe du tube 50.

Par ailleurs, l'extrémité axiale arrière 58 du tube 50 dépasse axialement vers l'arrière au-delà de l'extrémité arrière 60 du corps principal 18 et comporte un collet radial externe 106 qui coopère avec l'extrémité arrière 60 du corps principal 18 pour déterminer la position axiale du tube 50 dans le corps principal 18.

Le tronçon avant 38 de la jupe annulaire 36 du piston 20 délimite un logement cylindrique qui permet le guidage d'un ressort de compression 64 qui est interposé, dans la chambre hydraulique 16, entre la paroi transversale avant 28 du corps principal 18 et la face avant transversale 30 du piston 20, dans le but de forcer le piston 20 au contact de la tige de commande 22.

-De manière similaire, le tronçon arrière tubulaire 40 de la jupe annulaire 36 délimite un logement cylindrique dans lequel est reçue l'extrémité axiale avant de la tige de commande 22.

L'étanchéité de la chambre hydraulique 16 par rapport à l'extérieur est assurée par deux joints d'étanchéité, primaire 66 et secondaire 68, qui sont portés respectivement par le corps de cylindre 17 et par le tube arrière 50, et coopèrent avec la surface cylindrique externe 48 de la jupe annulaire 36 du piston 20.

Dans le mode de réalisation de l'invention, le joint d'étanchéité primaire est réalisé sous la forme d'un joint composite 66.

Le joint composite 66 comporte essentiellement une bague interne 88 annulaire en matériau à faible coefficient de frottement tel que le «Teflon», et un anneau externe 90 en matière élastomère et il est destiné à être monté serré dans un logement cylindrique 92 formé dans la paroi transversale 78 qui délimite les parties avant 24 et arrière 26 du corps principal 18.

Le logement cylindrique 92 est d'un diamètre compris entre celui des surfaces cylindriques internes 70, 42 respectivement des parties arrière 26 et avant 24 du corps principal 18, et il débouche dans la partie arrière 26 par un chanfrein 95.

Lorsqu'il est en position montée, le joint composite 66 est en butée axialement vers l'avant contre une face axiale avant 94 du logement 92 et il est serré radialement entre la surface cylindrique latérale 93 du logement 92 et la surface cylindrique externe 48 du piston 20.

L'anneau externe 90 en matière élastomère permet, en se déformant, de bien maîtriser la force de serrage appliquée sur la bague interne 88 tout en rattrapant un éventuel défaut de coaxialité entre le piston 48 et le corps de cylindre 17.

On obtient de la sorte une pression de contact entre la bague interne 88 et le piston 48 qui est homogène surtoute la circonférence du piston 48 et on obtient une excellente étanchéité sans pour autant induire des forces de frottement importantes entre le piston 20 et le corps de cylindre 17.

Il est nécessaire, pour le bon fonctionnement du joint composite 66, que la bague interne 88 et l'anneau externe 90 soient agencés axialement dans le même plan et il est prévu à cet effet une rondelle annulaire d'appui 96 particulière.

La rondelle annulaire d'appui 96 est en appui par la périphérie externe 98 de sa face avant contre la face arrière 100 de la paroi transversale 78 et la périphérie interne de sa face avant possède un bossage central 102 qui permet de serrer le joint composite 66 contre la face axiale avant 94 du logement cylindrique 92.

La rondelle d'appui 96 est elle-même maintenue axialement contre la paroi transversale 78 par l'extrémité axiale avant 74 du tube arrière de guidage 50 qui est en appui contre sa face arrière 104. Le bossage central 102 de la face avant de la rondelle d'appui 96 est relié à la périphérie externe 98 par un profil correspondant au chanfrein 95, ce qui permet d'obtenir, par leur coopération, un très bon centrage de la rondelle d'appui 96 dans le corps principal 18.

Dans l'exemple de réalisation de l'invention qui est représenté sur les figures 1 à 3, le joint secondaire - 68 est agencé dans un logement cylindrique 76 qui est formé dans la surface cylindrique interne 52 du tube arrière 50 et qui débouche dans l'extrémité avant 74 de ce tube 50, et le joint secondaire 68 est réalisé sous la forme d'une coupelle à lèvres en élastomère.

Le diamètre externe du joint 68 est supérieur au diamètre externe du joint 66.

Toutefois, le joint secondaire 68 pourrait aussi être réalisé sous la forme d'un joint composite.

Conformément aux enseignements de l'invention, le montage d'un cylindre récepteur 10 tel que celui représenté sur les figures est réalisé par séries d'opérations effectuées successivement dans la même direction, ce qui est particulièrement intéressant en vue de l'automatisation du montage.

L'invention permet donc un montage simple de l'ensemble des composants, selon une seule direction, en constituant tout d'abord un sous-ensemble autour duquel est emboîté le corps principal 18.Dans ce cas, le joint secondaire 68 et le piston 20 sont agencés successivement dans le tube 50 puis la rondelle d'appui particulière 96 et lejoint composite sont introduits autour du piston 20, en appui contre l'extrémité axiale avant 74 du tube arrière 50.

Le corps principal 18 est alors emboîté axialement sur ces éléments qui forment un sous-ensemble prémonté, le ressort de compression 64 étant interposé entre le corps principal 18 et la face avant 30 du piston 20.

Lorsque le joint composite 66 arrive au contact du chanfrein 95 de son logement cylindrique 92, il est forcé à l'intérieur du logement 92 par le bossage périphérique interne 102 de la rondelle d'appui 96 jusqu'au fond du logement 92.

Le chanfrein 95 permet notamment de faciliter l'introduction du joint 66 dans le logement 92.

La position axiale du tube arrière 50 est déterminée par l'arrivée en butée de la rondelle d'appui 96 contre la face arrière de la paroi transversale 78. La rondelle 96 est alors serrée axialement entre la paroi transversale 78 et l'extrémité axiale avant 74 du tube arrière 50.

Pour faciliter l'entrée de l'extrémité axiale avant 44 du piston 20 dans la chambre hydraulique 16 lorsque le corps principal est emboîté axialement sur le sous-ensemble prémonté, l'extrémité avant 44 du piston 20 et l'extrémité arrière de la chambre 16 sont chanfreinées.

Dans ce mode de-réalisation, le collet radial interne 62 de l'extrémité axiale arrière 58 est réalisé sous la forme d'une pièce indépendante rapportée.

Ainsi, on peut prévoir que la fixation du collet radial interne 62 soit la dernière opération de l'assemblage. Il est alors possible d'utiliser, pour le montage du sous-ensemble, un faux piston (non représenté) dont les caractéristiques dimensionnelles facilitent les diverses opérations de montage et d'assemblage. Le faux piston est remplacé par le piston 20 définitif avant que le collet radial interne 62 ne se soit rapporté sur le tube arrière 50.

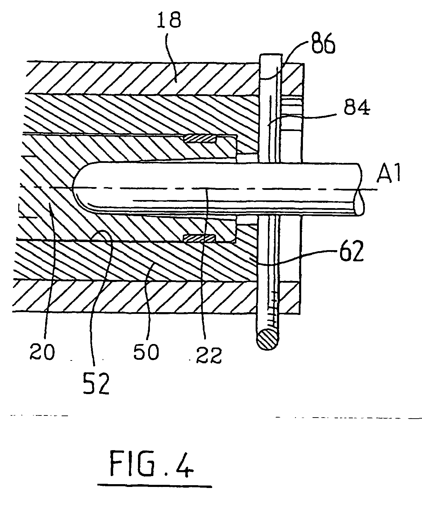

Dans la variante illustrée à la figure 4, le tube arrière 50 est fixé axialement dans la partie arrière 26 du corps principal 18 par une broche transversale 84 qui est reçue dans des orifices transversaux 86 agencés à l'extrémité axiale arrière 60 du corps principal 18 et qui coopère avec l'extrémité axiale arrière 58 du tube arrière de guidage 50.

De même selon cette variante, le tube arrière comporte un collet radial interne 62 qui est réalisé venu de matière avec le tube 50 et le piston 20 est réalisée par forgeage.

On peut également prévoir de réaliser la fixation axiale du tube arrière 50 en utilisant un dispositif à baïonnette (non représenté).

Une telle conception d'un cylindre récepteur 10 permet donc de réaliser une étanchéité particulièrement fiable et performante de la chambre d'étanchéité 16 tout en favorisant la facilité de montage du cylindre 10.

L'invention a été ci-dessus décrite pour un cylindre récepteur, mais on pourra transposer aisément les enseignements de l'invention pour réaliser un cylindre émetteur de structure similaire.

Ainsi qu'on l'aura compris, s'agissant d'une application à un embrayage de véhicule automobile, lorsque le piston 20 est en position avancée l'embrayage est engagé, le diaphragme, que comporte usuellement l'embrayage, repousse via la fourchette de débrayage la tige 22, le ressort 64 étant alors comprimé. La chambre hydraulique 16 est alors dépressurisée. Le ressort 64 exerce alors une précharge permettant d'appliquer constamment la butée de débrayage, manoeuvrée par la fourchette de débrayage, au contact du diaphragme.

En pressurisant la chambre 16 on déplace le piston et donc la tige 22, la fourchette de débrayage et la butée de débrayage. Lorsque le piston 30 occupe sa position reculée l'embrayage est alors désengagé.

Bien entendu le tube arrière peut être métallique.

Néanmoins il est avantageux qu'il soit en matière plastique de façon qu'il se dilate de la même manière que le corps principal 18. En outre le tube arrière 50 ainsi que le corps principal 18 servent au guidage du piston. Dans ce cas le corps principal et le tube arrière sont avantageusement en matière plastique à faible coefficient de frottement. On appréciera, lorsque le piston est embouti que l'on réduise l'encombrement axial puisque la tige de commande pénètre à l'intérieur au moins de la spire d'extrémité du ressort 64.

Dans tous les cas le tube arrière 50 s'engage à la manière d'un bouchon dans le corps principal 18.

Bien entendu on peut prévoir un joint torique entre la périphérie interne du corps principal 18 et la périphérie externe du tube arrière, ledit joint étant monté par exemple dans une gorge du corps principal.

Toute fuite est ainsi évitée à ce niveau.

Bien entendu on peut prévoir sur le piston des patins de guidage, en matière à faible coefficient de frottement et la présence du deuxième joint 68 n'est pas obligatoire, ce deuxième joint étant là pour réaliser une étanchéité parfaite en cas de fuite au niveau du premier joint.

## Revendications

1. Cylindre de commande (10) pour un dispositif de commande hydraulique d'un embrayage de véhicule automobile, du type dans lequel un corps principal (18) de forme générale tubulaire étagée comporte une partie tubulaire avant (24), fermée à l'avant, et une partie tubulaire arrière (26) de diamètre supérieur ouverte à l'arrière, les deux parties étant délimitées axialement par une paroi transversale annulaire (78), du type dans lequel une chambre hydraulique (16) est délimitée dans la partie avant (24) du corps principal (18) par un piston (20) dont un tronçon arrière (40) est guidé dans un tube arrière (50) monté dans la partie arrière (26) du corps principal (18), et dans lequel l'étanchéité du cylindre (10) est réalisée par :
- un joint d'étanchéité primaire (66) coopérant avec le piston (20) qui est reçu dans un logement (92) formé dans la paroi transversale annulaire (78) qui comporte une surface latérale cylindrique qui débouche dans une face arrière (100) de la paroi (78),
- un joint d'étanchéité secondaire (68) coopérant avec le piston (20) qui est réalisé sous la forme d'une coupelle à lèvres (68) portée par le tube arrière (50),
et du type dans lequel une rondelle d'appui (96) est serrée axialement entre l'extrémité avant (74) du tube arrière (50) et la face arrière (100) de la paroi transversale annulaire (78) dans laquelle est agencé le logement (92),
**caractérisé en ce que** le joint d'étanchéité primaire (66) est un joint composite (66) qui est monté serré axialement contre une face axiale avant (94) du logement cylindrique (92).

2. Cylindre selon la revendication 1, **caractérisé en ce que** la rondelle annulaire d'appui (96) comporte à la périphérie interne de sa face avant un bossage central (102) qui permet de serrer axialement le joint composite (66) contre la face axiale avant (94) du logement cylindrique (92).

3. Cylindre selon la revendication 2, **caractérisé en ce que** la rondelle d'appui 96 est en appui par la périphérie externe (98) de sa face avant contre la face arrière (100) de la paroi transversale (78) et est maintenue axialement contre cette paroi transversale (78) par l'extrémité axiale avant (74) du tube arrière de guidage (50) qui est en appui contre sa face arrière (104).

4. Cylindre selon l'une des revendications précédentes, **caractérisé en ce que** la surface latérale cylindrique dudit logement (92) débouche dans la face arrière (100) de la paroi annulaire transversale (78) par une extrémité chanfreinée (95) de manière à faciliter l'entrée du joint composite (66) dans le logement (92).

5. Cylindre selon la revendication 4, **caractérisé en ce que** le bossage central (102) de la face avant de la rondelle d'appui (96) est relié à la périphérie externe (98) par un profil correspondant au chanfrein (95) de manière à obtenir, par leur coopération, un très bon centrage de la rondelle d'appui (96) dans le corps principal (18).

6. Cylindre selon l'une quelconque des revendications précédentes, **caractérisé en ce que** l'extrémité axiale avant (44) du piston (20) est chanfreinée pour faciliter son introduction dans la partie avant (24) du corps principal (18).

7. Cylindre selon l'une quelconque des revendications précédentes, **caractérisé en ce que** le tube arrière (50) et le corps principal (18) sont réalisés en matière plastique, et **en ce qu'**ils sont fixés l'un à l'autre par soudage ou par collage.

8. Cylindre selon la revendication 7, **caractérisé en ce que** le tube arrière (50) comporte un collet radial externe (106) qui est agencé à son extrémité axiale arrière (58) et qui comporte une face annulaire avant agencée en regard de l'extrémité axiale arrière (60) du corps principal (18), et **en ce que** le collage ou le soudage sont réalisés, au moins en partie, entre les faces en regard du collet radial externe (106) et de l'extrémité arrière (60) du corps principal (18).

9. Cylindre selon l'une quelconque des revendications précédentes, **caractérisé en ce qu'**il est prévu un collet radial interne (62) agencé à l'extrémité axiale arrière (58) du tube arrière (50) pour former une butée axiale arrière pour le piston (20) qui est susceptible de se déplacer axialement dans le cylindre, et **en ce que** le collet radial interne (62) est réalisé sous la forme d'une pièce rapportée de manière à permettre l'utilisation au cours de l'assemblage du cylindre (10), d'un faux piston dont les caractéristique géométriques facilitent l'assemblage, le faux piston étant remplacé ensuite par le piston (20) définitif avant que le collet radial interne (62) ne soit rapporté sur le tube arrière (50).

10. Cylindre selon l'une quelconque des revendications 1 à 7,
**caractérisé en ce que** le tube arrière (50) et le corps principal (18) sont réalisés en matière plastique et **en ce qu'**ils sont fixés l'un à l'autre par soudage ou par collage.

11. Procédé pour l'assemblage d'un cylindre de commande selon l'une quelconque des revendications précédentes, **caractérisé en ce qu'**il consiste à emboîter axialement le corps principal (18) autour d'un sous-ensemble dont le montage comprend les étapes suivantes :
- monter le tube arrière (50) sur le piston (20) ;
- monter la coupelle à lèvres (68) dans un logement cylindrique interne (76) du tube arrière (50) qui débouche à l'extrémité axiale avant (74) du tube (50) ;
- monter une rondelle d'appui (96) en butée contre l'extrémité avant (74) du tube (50) ;
- monter le joint composite (66) en appui contre la rondelle (96).

12. Procédé selon la revendication 11, **caractérisé en ce que**, lorsque le corps principal (18) est emboîté autour du sous-ensemble, un ressort de compression (64) est interposé axialement entre une paroi transversale avant (28) de la partie avant (24) du corps principal (18) et une face transversale avant (30) du piston (20).

## Patentansprüche

1. Betätigungszylinder (10) für eine Vorrichtung zur hydraulischen Betätigung einer Kraftfahrzeugkupplung, bei dem ein Hauptkörper. (18) mit einer abgestuften rohrförmigen Gesamtform einen an der Vorderseite geschlossenen rohrförmigen vorderen Teil (24) und einen an der Rückseite offenen rohrförmigen hinteren Teil (26) mit größerem Durchmesser umfasst, wobei die beiden Teile axial durch eine ringförmige Querwand (78) begrenzt sind, wobei eine Hydraulikkammer (16) im vorderen Teil (24) des Hauptkörpers (18) durch einen Kolben (20) begrenzt wird, dessen hinteres Teilstück (40) in einem hinteren Rohr (50) geführt ist, das im hinteren Teil (26) des Hauptkörpers (18) angebracht ist, und wobei die Abdichtung des Zylinders (10) erfolgt durch:
- eine mit dem Kolben (20) zusammenwirkende Primärdichtung (66), die in einer Aufnahme (92) aufgenommen ist, die in der ringförmigen Querwand (78) ausgebildet ist, und die eine zylindrische Seitenfläche umfasst, die in einer rückseitigen Fläche (100) der Querwand (78) mündet,
- eine mit dem Kolben (20) zusammenwirkende Sekundärdichtung (68), die in Form eines am hinteren Rohr (50) angebrachten Dichtlippentellers (68) ausgeführt ist,
wobei eine Auflagescheibe (96) axial zwischen dem vorderen Ende (74) des hinteren Rohrs (50) und der rückseitigen Fläche (100) der ringförmigen Querwand (78), in der die Aufnahme (92) angeordnet ist, eingespannt ist,
**dadurch gekennzeichnet,**
**dass** die Primärdichtung (66) eine Verbunddichtung (66) ist, die axial gegen eine axial vordere Fläche (94) der zylindrischen Aufnahme (92) eingespannt montiert ist.

2. Zylinder nach Anspruch 1, **dadurch gekennzeichnet, dass** die ringförmige Auflagescheibe (96) am inneren Umfang ihrer Vorderseite einen mittigen Vorsprung (102) aufweist, der es ermöglicht, die Verbunddichtung (66) axial gegen die axial vordere Fläche (94) der zylindrischen Aufnahme (92) einzuspannen.

3. Zylinder nach Anspruch 2, **dadurch gekennzeichnet, dass** die ringförmige Auflagescheibe (96) durch den äußeren Randbereich (98) ihrer Vorderseite an der Rückseite (100) der Querwand (78) zur Anlage kommt und axial an dieser Querwand (78) durch das axial vordere Ende (74) des hinteren Führungsrohrs (50) gehalten wird, das an seiner Rückseite (104) anliegt.

4. Zylinder nach einem der vorangehenden Ansprüche, **dadurch gekennzeichnet, dass** die zylindrische Seitenfläche der Aufnahme (92) in der rückseitigen Fläche (100) der ringförmigen Querwand (78) durch ein abgeschrägtes Ende (95) mündet, um das Einsetzen der Verbunddichtung (66) in die Aufnahme (92) zu erleichtern.

5. Zylinder nach Anspruch 4, **dadurch** gekennzeich-net, dass der mittige Vorsprung (102) der Vorderseite der Auflagescheibe (96) mit dem äußeren Randbereich (98) durch ein Profil entsprechend der Abschrägung (95) verbunden ist, so dass durch ihr Zusammenwirken eine sehr gute Zentrierung der Auflagescheibe (96) im Hauptkörper (18) erzielt werden kann.

6. Zylinder nach einem der vorangehenden Ansprüche, **dadurch gekennzeichnet, dass** das vordere axiale Ende (44) des Kolbens (20) abgeschrägt ist, um seine Einführung in den vorderen Teil (24) des Hauptkörpers (18) zu erleichtern.

7. Zylinder nach einem der vorangehenden Ansprüche, **dadurch gekennzeichnet, dass** das hintere Rohr (50) und der Hauptkörper (18) aus Kunststoff ausgeführt sind und dass sie durch Verschweißen oder Verkleben aneinander befestigt sind.

8. Zylinder nach Anspruch 7, **dadurch gekennzeichnet, dass** das hintere Rohr (50) einen äußeren radialen Bund (106) umfasst, der an seinem hinteren axialen Ende (58) angeordnet ist und der eine vordere ringförmige Fläche umfasst, die gegenüber dem hinteren axialen Ende (60) des Hauptkörpers (18) angeordnet ist, und dass das Verkleben oder das Verschweißen wenigstens teilweise zwischen den gegenüberliegenden Flächen des äußeren radialen Bunds (106) und dem hinteren Ende (60) des Hauptkörpers (18) erfolgt.

9. Zylinder nach einem der vorangehenden Ansprüche, **dadurch gekennzeichnet, dass** ein innerer radialer Bund (62) vorgesehen ist, der am hinteren axialen Ende (58) des hinteren Rohrs (50) angeordnet ist, um einen hinteren axialen Anschlag für den Kolben (20) zu bilden, der sich axial im Zylinder verschieben kann, und dass der innere radiale Bund (62) in Form eines angefügten Teils ausgeführt ist, um im Verlauf des Zusammenbaus des Zylinders (10) die Verwendung eines Blindkolbens zu ermöglichen, dessen geometrische Eigenschaften den Zusammenbau vereinfachen, wobei der Blindkolben anschließend durch den endgültigen Kolben (20) ersetzt wird, bevor der innere radiale Bund (62) am hinteren Rohr (50) angefügt wird.

10. Zylinder nach einem der Ansprüche 1 bis 7, **dadurch gekennzeichnet, dass** das hintere Rohr (50) und der Hauptkörper (18) aus Kunststoff ausgeführt sind und dass sie durch Verschweißen oder Verkleben aneinander befestigt sind.

11. Verfahren zum Zusammenbau eines Betätigungszylinders nach einem der vorangehenden Ansprüche, **dadurch gekennzeichnet, dass** es darin besteht, den Hauptkörper 18 axial um eine Untergruppe herum einzufügen, wobei die Montage die folgenden Schritte umfasst:
- Anbringung des hinteren Rohrs (50) am Kolben (20);
- Anbringung des Dichtlippentellers (68) in einer inneren zylindrischen Aufnahme (76) des hinteren Rohrs (50), die am vorderen axialen Ende (74) des Rohrs (50) mündet;
- Anbringung einer Auflagescheibe (96) anstoßend an das vordere Ende (74) des Rohrs (50);
- Anbringung der Verbunddichtung (66) in Anlage an der Auflagescheibe (96).

12. Verfahren nach Anspruch 11, **dadurch gekennzeichnet, dass**, wenn der Hauptkörper (18) um die Untergruppe herum eingefügt wird, eine Druckfeder (64) axial zwischen einer vorderen Querwand (28) des vorderen Teils (24) des Hauptkörpers (18) und einer vorderen Querfläche (30) des Kolbens (20) eingefügt wird.

## Claims

1. A control cylinder (10) for a hydraulic control device for a motor vehicle clutch, of the type in which a man body (18), of stepped, generally tubular form, comprises a tubular front portion (24) closed at the front, and a tubular rear portion (26) of larger diameter, which is open to the rear, the two portions being delimited axially by an annular transverse wall (78), of the type in which a hydraulic chamber (16) is defined in the front portion (24) of the main body (18) by a piston (20), a rear portion (40) of which is guided in a rear tube (50) mounted in the rear portion (26) of the main body (18), and in which the cylinder (10) is sealed by:
- a primary seal (66) cooperating with the piston, the primary seal being received in a seating (92) which is formed in the transverse annular wall (78) and which has a lateral cylindrical surface open in a rear face (100) of the wall (78),
- a secondary seal (68) cooperating with the piston (20), the secondary seal being made in the form of a lipped cupped seal (68) carried by the rear tube (50),
and of the type in which a thrust ring (96) is clamped axially between the front end (74) of the rear tube (50) and the rear face (100) of the transverse annular wall (78) in which the seating (92) is formed,
**characterised in that** the primary seal (66) is a composite seal (66) which is compressed axially against a front axial face (94) of the cylindrical seating (92).

2. A cylinder according to Claim 1, **characterised in that** the annular thrust ring (96) includes at the inner periphery of its front face a central boss (102) which enables the composite seal (66) to be compressed against the front axial face (94) of the cylindrical seating (92).

3. A cylinder according to Claim 2, **characterised in that** the thrust ring (96) is in engagement, through the outer periphery (98) of its front face, against the rear face (100) of the transverse wall (78), and is maintained axially against the said transverse wall (78) by the axial front end (74) of the rear guide tube (50) which is in engagement against its rear face (104).

4. A cylinder according to one of the preceding Claims, **characterised in that** the cylindrical lateral surface of the said seating (92) is open in the rear face (100) of the transverse annular wall (78) through a chamfered end (95), whereby to facilitate entry of the composite seal (66) into the seating (92).

5. A cylinder according to Claim 4, **characterised in that** the central boss (102) of the front face of the thrust ring (96) is joined to the outer periphery (98) by a profile corresponding to the chamfer (95), whereby to obtain, by virtue of their cooperation, very good centring of the thrust ring (96) in the main body (18).

6. A cylinder according to any one of the preceding Claims, **characterised in that** the front axial end (44) of the piston (20) is chamfered so as to facilitate its introduction into the front portion (24) of the main body (18).

7. A cylinder according to any one of the preceding Claims, **characterised in that** the rear tube (50) and the main body (18) are made of plastics material, and **in that** they are secured to each other by welding or adhesive bonding.

8. A cylinder according to Claim 7, **characterised in that** the rear tube (50) includes an external radial collar portion (106) which is formed at its axial rear end (58) and which has an annular surface at the front, facing towards the rear axial end (60) of the main body (18), and **in that** the adhesive bond or weld is made at least partly between the facing surfaces of the external radial collar portion (106) and the rear end (60) of the main body (18).

9. A cylinder according to any one of the preceding Claims, **characterised in that** an internal radial collar portion (62) is formed at the rear axial end (58) of the rear tube (50), so as to define a rear axial abutment for the piston (20), which is displaceable axially in the cylinder, and **in that** the internal radial collar portion (62) is in the form of a separate fitted component, whereby to enable a false piston having geometrical characteristics that facilitate assembly to be used during assembly of the cylinder (10), the false piston being subsequently replaced by the correct piston (20) before the internal radial collar portion (62) is fitted on the rear tube (50).

10. A cylinder according to any one of Claims 1 to 7, **characterised in that** the rear tube (50) and main body (18) are made of plastics material, and **in that** they are fixed to each other by welding or adhesive bonding.

11. A method of assembling a control cylinder according to any one of the preceding Claims, **characterised in that** it consists in fitting the main body (18) axially around a sub-assembly, the fitting of which comprises the following steps:
- fitting the rear tube (50) on the piston (20);
- fitting the lipped cup seal (68) in an internal cylindrical seating (76) in the rear tube (50), which is open at the front axial end (74) of the tube (50);
- fitting a thrust ring (96) in abutting engagement against the front end (74) of the tube (50);
- fitting the composite seal (66) in engagement against the thrust ring (96).

12. A method according to Claim 11, **characterised in that**, when the main body (18) is fitted around the sub-assembly, a compression spring (64) is interposed axially between a front transverse wall (28) of the front portion (24) of the main body (18) and a transverse front face (30) of the piston (20).
